# EUROPEAN PATENT SPECIFICATION

(11) **EP 2 672 138 B1**
(45) Date of publication and mention of the grant of the patent: **29.10.2014**
(21) Application number: 11711949.5
(22) Date of filing: 31.01.2011
(51) Int. Cl.: F16F 9/02, F16F 9/54, B21J 13/03, B21D 24/02

(54) **GAS SPRING**
GASFEDER
RESSORT À GAZ

(43) Date of publication of application: 11.12.2013
(73) Proprietor: Azol-Gas, S. L., 01015 Vitoria, Álava (ES)
(72) Inventor: ESTIRADO, Félix, E-01015 Vitoria (Álava) (ES); ALEJOS, Oscar, E-01015 Vitoria (Álava) (ES)
(74) Representative: Pons Ariño, Angel
(86) International application number: PCT/ES2011/070058
(87) International publication number: WO 2012/104442

(56) References cited:
- EP-A1- 0 424 122
- EP-A2- 0 192 115
- WO-A1-2006/038855
- JP-A- 2009 168 240
- JP-A- 2010 190 354
- US-A- 3 348 855

## Description

### OBJECT OF THE INVENTION

The object of the invention is a gas spring which can absorb movements perpendicular to the operating axis thereof.

### BACKGROUND OF THE INVENTION

Gas springs are applied during sheet shaping processes, limiting the stress exerted thereon and making it possible for them to be displaced of the shaping tools with a slight increase of force.

The dies wherein these gas springs are installed tend to have guidance suitable to the functions thereof; however, specific parts thereof can have slight horizontal oscillations within its vertical movement actuated by the press. These types of horizontal oscillations are generally caused by floating plates used to hold the sheet piece while work is done thereon, or due to vibrations of the die itself when very localized stresses are made on a part thereof and not completely offset.

In order to resolve this problem, the use of a spherical surface on the end of the mobile axis is known, *e.g.* from document EP-A-0192115, which permits a certain slope oscillation of the support on the gas spring and permits a certain displacement due to the lesser friction factor of those surfaces. Nevertheless, this solution presents the drawback that the surface can make a print on the die, deforming it and reducing the operational stroke.

Also known is another solution which has one or two sliding elements inserted into a mechanized box at the end of the piston rod which permits the absorption of the previously described movements perpendicular to the operating axis of the piston rod as disclosed in document WO 2006/038855.

The present invention proposes an alternative solution to those mentioned above which resolves the aforementioned drawbacks.

### DESCRIPTION OF THE INVENTION

The gas spring object of the invention is of the type which comprises a hollow cylindrical body with one open end and a piston rod located inside the hollow cylindrical body which can be moved therein through its open end. The spring further comprises a sliding element connected to the free end of the piston rod and laterally displaceable with respect thereto, so that it permits the absorption of movements perpendicular to the operating axis thereof.

The spring that is object of the invention further comprises a connection means between the sliding element and the piston rod which comprises an internal part which is located inside the piston rod and an external part which protrudes from the free end of the piston rod. The sliding element is also situated on the free end of the piston rod, and the sliding element and the connection means are configured so that the sliding element is laterally displaceable with respect to the external part of the connection means.

The gas spring is going to be compressed by means of the action of a force on the sliding element, which in turn transmits the force to the gas spring, which displaces the piston rod to the inside of the gas volume of the hollow cylindrical body, compressing it and increasing its pressure and, therefore, the force of the gas spring. If the piece in contact with the sliding element suffers an oscillation in a direction perpendicular to that of the movement of the piston rod of the gas spring during that compression process, the sliding element will accompany that oscillation, but the force transmitted to the gas spring will continue to have the same component in the direction of the movement of the piston rod thereof.

The connection means between the sliding element and the piston rod also permits the sliding element to be fastened when the piston rod is in a reversed position and also facilitates the removal of the gas spring for maintenance work.

### DESCRIPTION OF THE DRAWINGS

In order to complement the description being carried out and with the purpose of helping towards a better understanding of the characteristics of the invention, in accordance with a preferred example of practical embodiment thereof, a set of drawings is attached as an integral part of said description wherein the following, in an illustrative and non-limitative character, has been represented:
Figure 1 shows a frontal schematic view of a first example of embodiment of the gas spring.
Figure 2 shows a schematic and enlarged cross-section of the upper part of the piston rod corresponding to the example of embodiment from figure 1.
Figure 3 shows a frontal schematic cross-section of a second example of embodiment of the gas spring.

### PREFERRED EMBODIMENT OF THE INVENTION

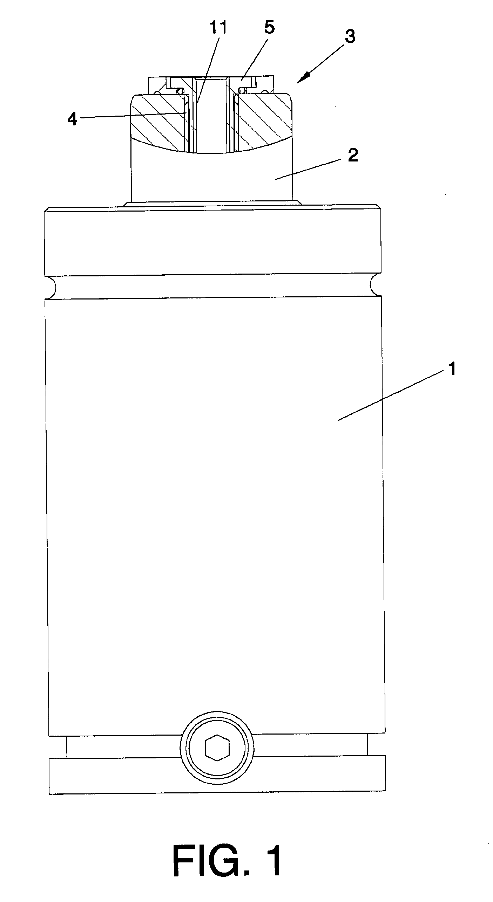

Figure 1 represents a frontal view of an example of an embodiment of a gas spring which comprises a hollow cylindrical body (1), a piston rod (2) located in the hollow cylindrical body (1) and which is displaceable therein through its open end and a sliding element (3) connected to the free end of the piston rod (2) and laterally displaceable with respect thereto.

Figure 1 features a first example of embodiment wherein the sliding element (3) is formed by a single body. The connection means (4) between the sliding element (3) and the piston rod (2) comprises an internal part which is located inside the piston rod (2) and an external part (5) which projects from the free end of the piston rod (2). The sliding element (3) is situated on the free end of the piston rod (2), and therefore projects out from the upper part of the piston rod. The sliding element (3) and the connection means (4) are configured so that the sliding element (3) is laterally displaceable with respect to the external part (5) of the connection means (4). That is, the connection means (4) is solidly joined to the piston rod (2) and the sliding element (3) is displaced with respect to the connection means (4) as it is subject to a horizontal force.

In the example of embodiment shown in the figures, the connection means (4) is located in the centre of the piston rod (2) and the sliding element (3) is disposed surrounding the external part (5) thereof (4).

The connection means (4) incorporates a central threaded orifice (11) for maintenance which permits the insertion of a threaded element and therefore the removal of the gas spring (1).

In order to enable the sliding element (3) to move with respect to the external part (5) of the connection means (4), there is a space between both elements (5, 3).

The sliding element (3) has a greater height than the external part (5) of the connection means (4) so that the piece which rests on the spring will make contact with the sliding element (3).

The connection means (4) also fulfils the function of fastening the sliding element (3) when the spring is located in reversed position. To do this, the connection means (4) and the sliding element (3) are configured so that the connection means (4) comprises a projection (6) corresponding to a recess (7) of the sliding element (3).

Finally, the spring comprises an elastic means (8) between the external part (5) of the connection element (4) and the sliding element (3) to centre the sliding element (3).

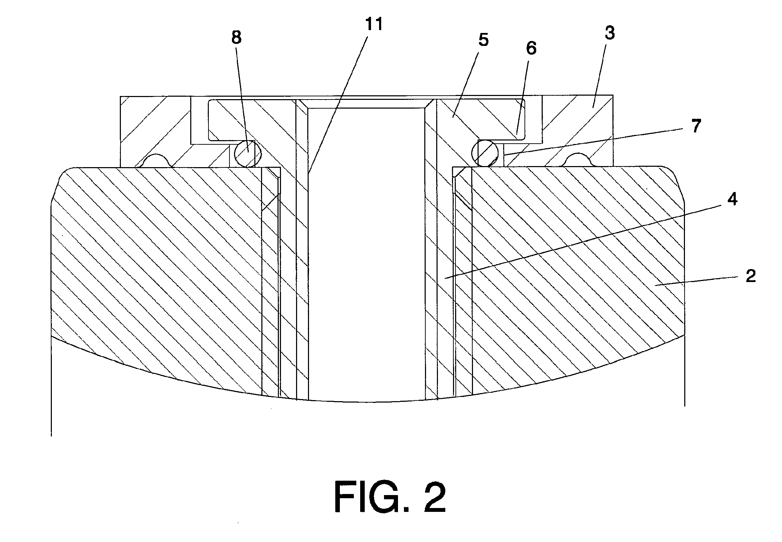

In figures 1 and 2, a first example of embodiment is represented wherein the sliding element (3) is solely capable of absorbing loads lateral thereto (3); for this reason, the free surface of the piston rod (3) is straight, in correspondence to the adjacent surface of the sliding element (3).

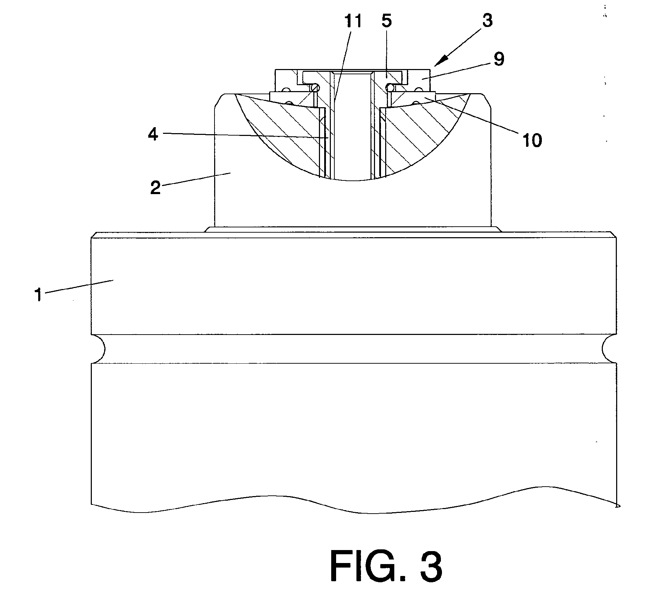

In figure 3, a second example of embodiment is represented wherein the sliding element (3) can absorb lateral loads and also achieves the adaptation to non-perpendicular thrust planes to said piston rod (2) of the gas spring.

To do that, the sliding element (3) comprises a first body (9) and a second body (10) situated between the first body (9) and the free surface of the piston rod (2), with at least one of the bodies (9, 10) having a convex support surface corresponding to another concave support surface of the adjacent element (2, 9, 10) so that the sliding element (3) has a lateral displacement and a displacement in the direction of the concave surface.

Figure 3 represents the case wherein it is the second body (10) that has the aforementioned convex surface corresponding to the concave surface of the upper part of the piston rod (2). Preferably, the concave and convex surfaces are spherical.

Therefore if, additionally, the direction of movement of the piece in contact with the sliding element (3) suffers an oscillation during that compression process so that the thrust plane is not perpendicular to that of the movement of the piston rod (2), the first body (9) of the sliding element (3) will accompany that oscillation thanks to the second body (10), so that the force transmitted to the gas spring will continue to have the same component in the direction of the movement of the piston rod thereof.

## Claims

1. Gas spring which comprises:
- a hollow cylindrical body (1) with an open end,
- a piston rod (2) located in the hollow cylindrical body (1) which is displaceable therein through the open end thereof,
- a sliding element (3) connected to the free end of the piston rod (2) and laterally displaceable with respect thereto,
**characterised in that** it further comprises a connection means (4) between the sliding element (3) and the piston rod (2) which comprises an internal part that is located inside the piston rod (2) and an external part (5) which projects from the free end of the piston rod (2), with the sliding element (3) being situated on the free end of the piston rod (2) and the sliding element (3) and the connection means (4) being configured so that the sliding element (3) is laterally displaceable with respect to the external part (5) of the connection means (4).

2. Gas spring, according to claim 1, **characterised in that** the connection means (4) are located in the centre of the piston rod (2) and the sliding element (3) is disposed surrounding the external part (5) thereof (4).

3. Gas spring, according to claims 1 or 2, **characterised in that** it comprises a space between the external part (5) of the connection means (4) and the sliding element (3) for the lateral displacement of the sliding element (3).

4. Gas spring, according to claim 1, **characterised in that** the sliding element (3) has a greater height than the external part (5) of the connection means (4).

5. Gas spring, according to claim 1, **characterised in that** the connection means (4) and the sliding element (3) are configured so that the connection means (4) comprises a projection (6) corresponding to a recess (7) of the sliding element (3) for the fastening thereof.

6. Gas spring, according to claim 1, **characterised in that** it comprises an elastic means (8) between the external part (5) of the connection element (4) and the sliding element (3).

7. Gas spring, according to claim 1, **characterised in that** the free surface of the piston rod (2) is straight, in correspondence with the adjacent surface of the sliding element (3).

8. Gas spring, according to claim 1, **characterised in that** the sliding element (3) comprises a first body (9) and a second body (10) situated between the first body (9) and the free surface of the piston rod (2), at least one of the bodies (9, 10) comprising a convex support surface corresponding to another concave support surface of the adjacent element (2, 9, 10) so that the sliding element (3) is laterally displaceable and displaceable in the direction of the concave surface with respect to the piston rod (2).

9. Gas spring, according to claim 8, **characterised in that** the second body (10) comprises a convex surface corresponding to the adjacent concave surface of the piston rod (2).

10. Gas spring, according to claim 1, **characterised in that** the connection means (4) comprises a central threaded orifice (11) for maintenance which permits the removal of the gas spring (1).

## Patentansprüche

1. Gasfeder, die Folgendes umfasst:
- ein hohles, zylinderförmiges Gehäuse (1) mit einem offenen Ende,
- eine Kolbenstange (2), die sich in dem hohlen, zylinderförmigen Gehäuse (1) befindet und in diesem durch das offene Ende desselben verschiebbar ist,
- ein Schiebeelement (3), das mit dem freien Ende der Kolbenstange (2) verbunden und gegenüber derselben seitlich verschiebbar ist,
**dadurch gekennzeichnet, dass** diese weiterhin ein Verbindungsmittel (4) zwischen dem Schiebeelement (3) und der Kolbenstange (2) umfasst, das einen internen, innerhalb der Kolbenstange (2) befindlichen Teil und einen externen Teil (5) umfasst, der sich von dem freien Ende der Kolbenstange (2) erstreckt, wobei das Schiebeelement (3) an dem freien Ende der Kolbenstange (2) angeordnet ist und das Schiebeelement (3) und das Verbindungsmittel (4) so ausgelegt sind, dass das Schiebeelement (3) seitlich gegenüber dem externen Teil (5) des Verbindungsmittels (4) verschiebbar ist.

2. Gasfeder nach Anspruch 1, **dadurch gekennzeichnet, dass** sich das Verbindungsmittel (4) in der Mitte der Kolbenstange (2) befindet und das Schiebelement (3) so angeordnet ist, dass dieses den externen Teil (5) des Verbindungsmittels (4) umgibt.

3. Gasfeder nach Anspruch 1 oder 2, **dadurch gekennzeichnet, dass** diese einen freien Raum zwischen dem externen Teil (5) des Verbindungsmittels (4) und dem Schiebeelement (3) zur seitlichen Verschiebung des Schiebeelements (3) umfasst.

4. Gasfeder nach Anspruch 1, **dadurch gekennzeichnet, dass** das Schiebeelement (3) eine größere Höhe als der externe Teil (5) des Verbindungsmittels (4) besitzt.

5. Gasfeder nach Anspruch 1, **dadurch gekennzeichnet, dass** das Verbindungsmittel (4) und das Schiebeelement (3) so ausgelegt sind, dass das Schiebeelement (4) einen Vorsprung (6) umfasst, der mit einer Vertiefung (7) im Schiebeelement (3) zur Befestigung desselben übereinstimmt.

6. Gasfeder nach Anspruch 1, **dadurch gekennzeichnet, dass** diese ein elastisches Mittel (8) zwischen dem externen Teil (5) des Verbindungsmittels (4) und dem Schiebeelement (3) umfasst.

7. Gasfeder nach Anspruch 1, **dadurch gekennzeichnet, dass** die freie Oberfläche der Kolbenstange (2) in Übereinstimmung mit der angrenzenden Oberfläche des Schiebeelements (3) geradlinig ist.

8. Gasfeder nach Anspruch 1, **dadurch gekennzeichnet, dass** das Schiebeelement (3) ein erstes Gehäuse (9) und ein zweites Gehäuse (10) umfasst, das zwischen dem ersten Gehäuse (9) und der freien Oberfläche der Kolbenstange (2) liegt, wobei mindestens eines der Gehäuse (9, 10) eine konvexe Stützoberfläche umfasst, die mit einer anderen konkaven Oberfläche des angrenzenden Elements (2, 9, 10) übereinstimmt, sodass das Schiebeelement (3) seitlich verschiebbar und in der Richtung der konkaven Oberfläche gegenüber der Kolbenstange (2) verschiebbar ist.

9. Gasfeder nach Anspruch 8, **dadurch gekennzeichnet, dass** das zweite Gehäuse (10) eine konvexe Oberfläche umfasst, die mit der angrenzenden konkaven Oberfläche der Kolbenstange (2) übereinstimmt.

10. Gasfeder nach Anspruch 1, **dadurch gekennzeichnet, dass** das Verbindungsmittel (4) eine mittige Gewindeöffnung (11) zu Wartungszwecken umfasst, welche die Entfernung der Gasfeder (1) erlaubt.

## Revendications

1. Ressort pneumatique qui comprend :
- un corps cylindrique creux (1) avec une extrémité ouverte,
- une tige de piston (2) située dans le corps cylindrique creux (1) que l'on peut déplacer à l'intérieur à travers l'extrémité ouverte de celui-ci,
- un élément coulissant (3) relié à l'extrémité libre de la tige de piston (2) et pouvant être déplacé latéralement par rapport à celui-ci,
**caractérisé en ce qu'**il comprend en outre un moyen de liaison (4) entre l'élément coulissant (3) et la tige de piston (2) qui comprend une partie interne située à l'intérieur de la tige de piston (2) et une partie externe (5) faisant saillie à partir de l'extrémité libre de la tige de piston (2), avec l'élément coulissant (3) étant situé sur l'extrémité libre de la tige de piston (2) et l'élément coulissant (3) et le moyen de liaison (4) étant configurés de telle sorte que l'élément coulissant (3) peut être déplacé latéralement par rapport à la partie externe (5) du moyen de liaison (4).

2. Ressort pneumatique selon la revendication 1, **caractérisé en ce que** les moyens de liaison (4) sont situés au centre de la tige de piston (2) et l'élément coulissant (3) est disposé autour de la partie externe (5) de celle-ci (4).

3. Ressort pneumatique, selon les revendications 1 ou 2, **caractérisé en ce qu'**il comprend un espace entre la partie externe (5) des moyens de liaison (4) et l'élément coulissant (3) pour le déplacement latéral de l'élément coulissant (3).

4. Ressort pneumatique, selon la revendication 1, **caractérisé en ce que** l'élément coulissant (3) a une hauteur plus importante que la partie externe (5) des moyens de liaison (4).

5. Ressort pneumatique selon la revendication 1, **caractérisé en ce que** le moyen de liaison (4) et l'élément coulissant (3) sont configurés de telle sorte que le moyen de liaison (4) comprend une saillie correspondant à un renfoncement de l'élément coulissant (3) pour la fixation de celui-ci.

6. Ressort pneumatique selon la revendication 1, **caractérisé en ce qu'**il comprend un moyen élastique (8) entre la partie externe (5) de l'élément de liaison (4) et l'élément coulissant (3).

7. Ressort pneumatique, selon la revendication 1, **caractérisé en ce que** la surface libre de la tige de piston (2) est droite, en correspondance avec la surface adjacente de l'élément coulissant (3).

8. Ressort à gaz selon la revendication 1, **caractérisé en ce que** l'élément coulissant (3) comprend un premier corps (9) et un second corps (10) situé entre le premier corps (9) et la surface libre de la tige de piston (2), au moins l'un des corps (9, 10) comprenant une surface de support convexe correspondant à une autre surface de support concave de l'élément adjacent (2, 9, 10) de sorte que l'élément coulissant (3) est déplaçable latéralement et peut être déplacé dans la direction de la surface concave par rapport à la tige de piston (2).

9. Ressort pneumatique, selon la revendication 8, **caractérisé en ce que** le second corps (10) comprend une surface convexe correspondant à la surface concave adjacente de la tige de piston (2).

10. Ressort pneumatique, selon la revendication 1, **caractérisé en ce que** le moyen de liaison comprend un orifice fileté central (11) pour la maintenance qui permet le retrait du ressort pneumatique (1).
